(19) Europäisches Patentamt
European Patent Office
Office européen des brevets

(11) **EP 0 779 144 A2**

(12) **EUROPÄISCHE PATENTANMELDUNG**

(43) Veröffentlichungstag:
**18.06.1997 Patentblatt 1997/25**

(51) Int. Cl.⁶: **B29C 55/06**

(21) Anmeldenummer: 96119326.5

(22) Anmeldetag: **03.12.1996**

(84) Benannte Vertragsstaaten:
**BE DE ES FR GB IT NL**

(30) Priorität: **15.12.1995 DE 19546671**

(71) Anmelder: **Hoechst Trespaphan GmbH
66539 Neunkirchen-Wellesweiler (DE)**

(72) Erfinder:
  • **Lohmann, Harald, Dipl.-Ing.
    66539 Neunkirchen (DE)**
  • **Peiffer, Herbert, Dr.
    55126 Mainz (DE)**
  • **Busch, Detlef, Dipl.-Ing.
    66740 Saarlouis (DE)**
  • **Eiden, Peter, Dipl.-Ing.
    66424 Homburg (DE)**

(54) **Verfahren zur Längsstreckung bei der Herstellung orientierter Polypropylenfolien**

(57)    Die Erfindung bezieht sich auf ein Verfahren zur Längsstreckung einer mindestens einschichtigen Folie aus thermoplastischem Kunststoff.

Der langsamlaufende Teil des Streckwerkes enthält mindestens eine angetriebene Walze und der schnelllaufende Teil des Streckwerkes mindestens zwei angetriebene Walzen, wobei das Walzenpaar so angeordnet ist, daß ein Walzenspalt gebildet wird in den die Folie derart geführt wird, daß sie gleichzeitig von dem Walzenpaar erfaßt und gestreckt wird.

Fig. 1

## Beschreibung

Die Erfindung betrifft ein Verfahren zur Längsstreckung biaxial orientierter Folien aus thermoplastischem Polymer, insbesondere Polypropylen. Die nach dem Verfahren hergestellten Folien zeichnen sich durch eine gute Siegelbarkeit, eine gute Optik und ein gutes Dickenprofil aus.

Im Stand der Technik sind verschiedene Verfahren zur Herstellung biaxial orientierter Polypropylen-Folien (boPP-Folien) bekannt. Beim Stenterverfahren erfolgt die Herstellung der boPP-Folie über Extrusion, Schmelzeausformung mittels Breitschlitzdüse, sowie Streckung in Längs- und in Querrichtung. Die Folie ist in der Regel mehrschichtig aufgebaut.

Im einzelnen wird dabei so vorgegangen, daß zunächst die Polymeren in Extrudern komprimiert, erwärmt und aufgeschmolzen werden. Die den einzelnen Schichten der Folie entsprechenden Schmelzen werden nach Filtration gemeinsam und gleichzeitig durch eine Breitschlitzdüse gepresst und dabei zu einem Schmelzefilm ausgeformt. Der Schmelzefilm wird auf eine Kühlwalze gegossen und verfestigt sich dort zu einer unorientierten Folie. Die Folie wird anschließend in Längsrichtung über Walzen und in Querrichtung in einem Reckofen orientiert und anschließend thermofixiert. Gegebenenfalls erfolgt eine Oberfächenbehandlung der Folie mittels Flamme oder Coronaverfahren. Die Folie wird aufgewickelt und zur kundenfertigen Schnittrolle konfektioniert.

Biaxial orientierte Polypropylenfolien zeichnen sich durch ein sehr gutes Eigenschaftsprofil aus. Ihre charakteristischen Eigenschaften sind hohe mechanische Festigkeiten, eine gute Heißsiegelfähigkeit und eine brilliante Optik. Aufgrund dieses guten Eigenschaftsbildes und einer ausgezeichneten Verarbeitbarkeit - kennzeichnend hierfür sind ein niedriger Schlupf, eine hohe Steifigkeit und ein gutes Dickenprofil - gelangen boPP-Folien in vielfältige Anwendungen. Wichtigstes Marksegment ist die Verpackung, in die ca. 80 % der produzierten Folien fließen. Daneben werden boPP-Folien in beträchtlichen Mengen in technischen Anwendungen eingesetzt. Zu nennen sind die Metallisierung und die Transfermetallisierung, die Kaschierung und die Verwendung als Elektroisolation bei Kondensatorfolie. Elektrofolien haben eine Foliendicke die in der Regel kleiner als 10 µm ist. Wesentliche Voraussetzung für eine einwandfreie Verarbeitung dieser sehr dünnen Folien ist eine sehr gutes Dickenprofil.

Der Trend bei der Herstellung von boPP-Folien geht hin zu höheren Produktionsgeschwindigkeiten und größeren Maschinenbreiten. 1980 lag die Maschinengeschwindigkeit, mit der boPP-Folien hergestellt werden, bei 100-150 m/min, heute liegt sie bei 300-400 m/min. Die Maschinenbreite betrug 1980 etwa 5 m, heute reicht sie bis zu 8 m. Durch Erhöhung der Produktionsgeschwindigkeit und der Maschinenbreite nimmt auch die Streckgeschwindigkeit, d.h. die Geschwindigkeit mit der die Folie orientiert wird, zu.

Durch Erhöhung der Streckgeschwindigkeit wird der thermoplastische Kunststoff bei der Orientierung mechanisch und thermisch höher belastet. Insbesondere in der Längsstreckung, bei der die Streckung der Folie auf sehr kurzem Weg zwischen zwei mit unterschiedlicher Geschwindigkeit laufenden Walzen erfolgt, kann die Erhöhung der Streckgeschwindigkeit zu einer Verschlechterung der Folienqualität führen.

Bei der Längsstreckung wird die Folienbahn zunächst über mehrere beheizte Walzen geführt, die das Material auf die zum Strecken erforderliche Temperatur bringen. Diese Walzen werden mit kleiner Umfangsgeschwindigkeit angetrieben. Danach gelangt die Folie auf eine oder mehrere Kühlwalzen, die mit größerer Umfangsgeschwindigkeit als die Heizwalzen angetrieben werden. Durch die unterschiedlichen Geschwindigkeiten der beheizten und der gekühlten Walzen kommt es zu einer Längsstreckung der Folie.

In der DE-AS 1 221 786 wird eine Vorrichtung zum Recken einer Folienbahn aus thermoplastischem Kunststoff in Längsrichtung beschrieben. Bei dieser Vorrichtung sind in Zugrichtung hinter dem von der Heizeinrichtung erwärmten Bereich zwei Rollen vorgesehen, die die Ränder der Folienbahn an eine Unterlage andrücken. Diese nichtangetriebenen Rollen haben die Aufgabe, einer Verringerung der Folienbahnbreite beim Längsstrecken entgegenzuwirken. Die Streckkraft wird bei diesem Verfahren über die Walzen einseitig auf die Folie aufgebracht.

In der DE-AS 1 212 290 wird eine Vorrichtung zur Längsstreckung einer Materialbahn beschrieben, bei der die Materialbahn in Längsrichtung durch Heizwalzen auf Strecktemperatur gebracht und im Streckbereich einer in Längsrichtung wirkenden Zugkraft unterworfen wird. Die Transporteinrichtungen für die Materialbahn sind derart angeordnet, daß sie die Zugkraft von dem auf der Heizwalze liegenden Teil der Materialbahn fernhalten. Bei einer zweckmäßigen Ausgestaltung der Erfindung werden die Transporteinrichtungen durch eine unabhängig von der Heizwalze angetriebenen Transportwalze und eine nicht angetriebene Gegendruckwalze gebildet. Nachteilig an dem beschriebenen Verfahren ist, daß die Zugkraft wiederum nur einseitig auf die Folie übertragen wird.

Eine besondere Ausgestaltung der Vorrichtung aus der DE-AS 1 212 290 ist in der DE-PS 1 504 058 beschrieben. Die Vorrichtung gemäß DE-AS 1 212 290 wird derart weiterentwickelt, daß in Abhängigkeit der Art und Stärke der Materialbahn, der Arbeitsgeschwindigkeit und dem gewünschten Streckverhältnis die optimale Länge der Streckzone exakt einzustellen ist. Dies wird erfindungsgemäß dadurch gelöst, daß zur Änderung der Länge der Streckzone das Transportwalzenpaar und/oder das Zugwalzenpaar um die Achse der Heizwalze bzw. der Kühlwalze schwenkbar ist. Nachteilig an dem Verfahren ist weiterhin die einseitige Krafteinbringung und die ungünstige Anordnung der Kühlwalzen 8 und 9.

In der DE-PS 1 919 299 wird ein Verfahren zum Längsrecken einer Kunststoffolie beansprucht, bei dem auf beson-

2

ders einfache Weise ein Längszug von der letzten Heizwalze ferngehalten wird. Erfindungsgemäß wird die Aufgabe dadurch gelöst, daß zwischen der Temperatur der letzten Heizwalze und der Temperatur der ersten Reckwalze ein vom Folienmaterial abhängiger Temperaturabfall erzeugt wird, der in einem Bereich von 2 bis 25°C liegt. Nachteilig an dem Verfahren ist wiederum die Einbringung der Streckkraft über nur jeweils eine, wenn auch abwechselnde Folienoberfläche. Darüberhinaus ist durch die ungünstige Anordnung der Walzen 7 und 8, die Gefahr von Lufteinzug zwischen der Folie und den Walzen 7 und 8 hier besonders groß.

In der DE-AS 2 833 189 wird ein Verfahren zum Längsrecken einer mindestens zweischichtigen Kunststoffolie beschrieben, wobei die Schicht mit höherem Schmelzpunkt orientiert wird und die Schicht mit niedrigerem Schmelzpunkt heißsiegelfähig ist. Die Folie wird vor Erreichen der Reckwalzen zunächst auf eine Temperatur erwärmt, die sowohl oberhalb der Recktemperatur der höher schmelzenden Schicht als auch oberhalb der Klebertemperatur der niedriger schmelzenden Schicht liegt. Danach wird die niedriger schmelzende Schicht sprungartig innerhalb eines kurzen Zeitintervalles auf eine wesentlich unterhalb der Klebetemperatur liegende Temperatur abgekühlt, wodurch aber die höher schmelzende Schicht auf Recktemperatur bleibt. Mit dieser Verfahrensweise wird ein Kleben der Folienoberflächen auf den Reckwalzen vermieden. Nachteilig an dem Verfahren ist wiederum, daß die Kraft zum Längsstrecken der Folie nur einseitig auf die Folien übertragen wird.

Den bekannten boPP-Herstellungsverfahren haftet der Nachteil an, daß diese Verfahren bei Erhöhung der Produktionsgeschwindigkeiten nicht mehr leistungsfähig sind. Diese Verfahren führen bei erhöhten Produktionsgeschwindigkeiten zu Folien mit ungleichmäßigem Dickenprofil und beeinträchtigen Siegeleigenschaften und schlechterer Folienoptik.

Aufgabe der vorliegenden Erfindung war es daher, ein Verfahren zur Längsstreckung einer Folie aus thermoplastischem Kunststoff bereitzustellen, mit dem bei den heute üblichen Produktionsgeschwindigkeiten eine Folie mit guter Siegelung, guter Optik und gutem Dickenprofil zur Verfügung gestellt wird.

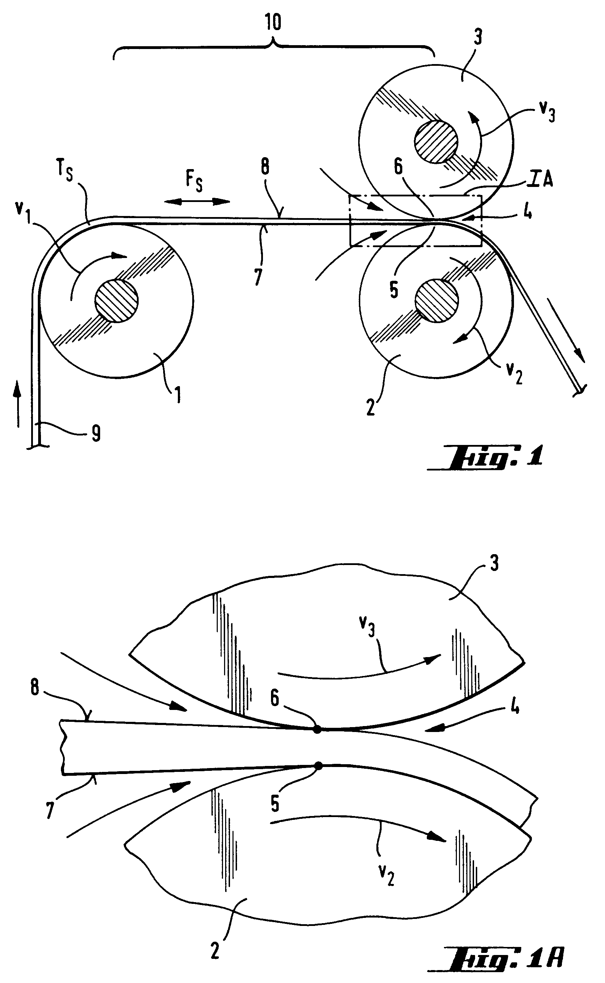

Die Aufgabe wird erfindungsgemäß durch ein Verfahren zur Längsstreckung einer mindestens einschichtigen Folie aus thermoplastischem Kunststoff gelöst. Bei dem erfindungsgemäßen Verfahren (die nachfolgenden Bezugszeichen beziehen sich auf Fig.1) wird die Folie vor der Längsstreckung im langsamlaufenden Teil des Streckwerkes auf eine für die Streckung geeignete Temperatur aufgewärmt und einer Streckzone (10) zugeführt. Das Verfahren ist dadurch gekennzeichnet, daß

a) der langsamlaufende Teil des Streckwerkes die angetriebene Walze (1) enthält und der schnellaufende Teil des Streckwerkes das angetriebene Walzenpaar (2)/(3) enthält, wobei das Walzenpaar (2)/(3) so angeordnet ist, daß ein Walzenspalt (4) gebildet wird und

b) die Folie (9) in den Walzenspalt (4) derart geführt wird, daß sie gleichzeitig oder nahezu gleichzeitig von dem Walzenpaar (2)/(3) in den Kontaktpunkten (5)/(6) erfaßt wird und die Folie (9) zwischen der Walze (1) und dem Walzenpaar (2)/(3) gestreckt wird.

Erfindungsgemäß ist das Walzenpaar (2)/(3) so angeordnet, daß die Folie in den Kontaktpunkten (5)/(6) nahezu gleichzeitig erfaßt wird, wodurch die Streckkraft im schnellaufenden Teil des Streckwerkes beidseitig auf die Folienoberflächen 7 und 8 übertragen wird. Hierdurch tritt im Vergleich zur einseitigen Streckkraftübertragung eine günstigere Spannungsverteilung innerhalb der Folie 9, insbesondere innerhalb der oberflächennahen Schichten der Folie 9, auf. Überraschender Weise werden durch den Antrieb der Walzen (2) und (3), und deren erfindungsgemäße Anordnung, d.h. durch die beidseitige Streckkraftübertragung die Eigenschaften der Folie deutlich besser. Dies gilt insbesondere für die optischen Eigenschaften und die Siegeleigenschaften der Folie.

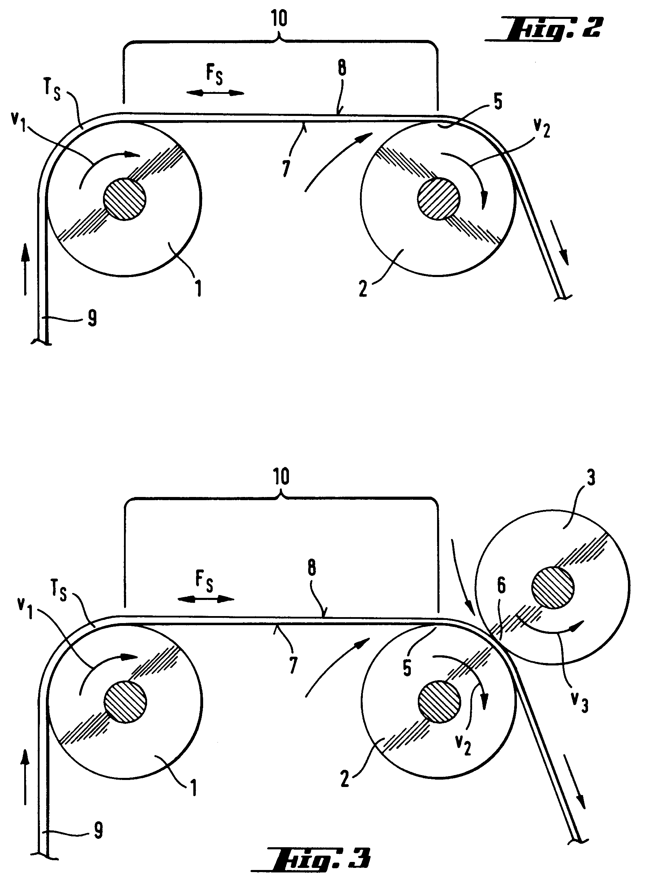

Es wurde gefunden, daß bei den Längsstreckverfahren nach dem Stand der Technik (vgl. Figur 2) die gesamte Streckkraft nur von einer Folienoberfläche (Figur 2, Folienoberfläche 7) aufgenommen, d.h. einseitig übertragen wird, wodurch in der oberflächennahen Schicht der Folie ein kritischer Spannungswert in/auf der Folie erreicht oder überschritten werden kann. Derartige Spannungsspitzen können eine Schädigung der Oberfläche zur Folge haben.

Infolge der um das Streckverhältnis f ($f = v_2/v_1$) geringeren Foliendicke im schnellaufenden Teil des Streckwerkes wird ein kritischer Spannungswert zuerst im schnellaufenden Teil des Längsstreckwerkes auftreten. Im langsamlaufenden Teil des Streckwerkes sind die Spannungen innerhalb der Folie wegen der größeren Dicke wesentlich kleiner, so daß dort die Gefahr einer Oberflächenschädigung der Folie deutlich geringer ist. Erfindungsgemäß genügt daher eine beidseitige Kraftübertragung durch die Walzen 2 und 3 im schnellaufenden Teil des Streckwerks um Optik, Dickenprofil und Siegeleigenschaften zu verbessern.

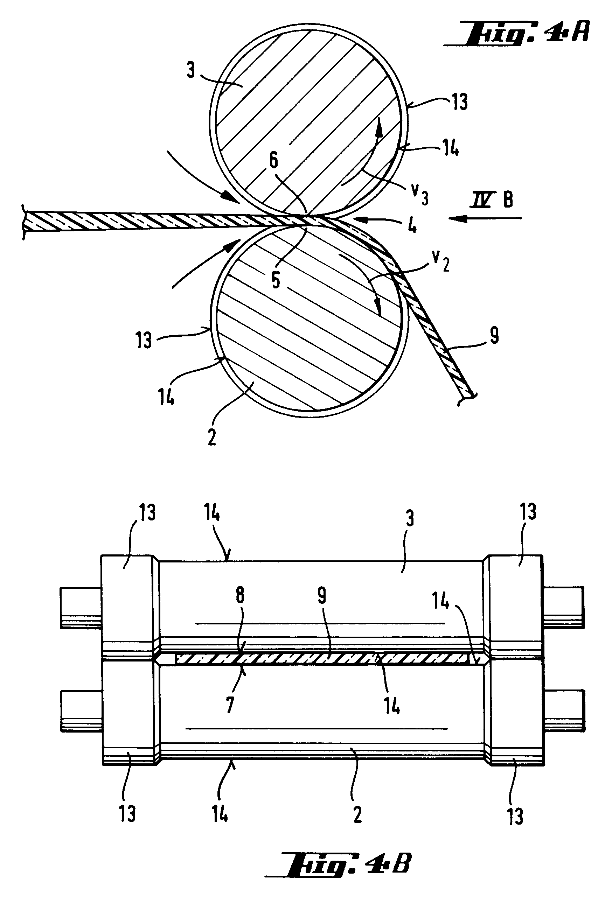

Darüber hinaus wird durch den gleichzeitigen Kontakt der Folienoberflächen 7 und 8 mit den Walzen 2 und 3 in den Punkten 5 und 6 gewährleistet, daß die von der Folienbahn 9 mitgeschleppte Luft in den Kontaktpunkten 5 und 6 abgequetscht wird. Die Folie liegt vollflächig auf den Walzen 2 und 3 auf, so daß eine optimale Kraftübertragung zwischen den Walzen 2 und 3 und den Folienoberflächen 7 und 8 gewährleistet ist. Wird dagegen die Walze 3 derart positioniert, wie in Figur 3 dargestellt, so wird Luft zwischen der Folie 9 und der Walze 2 eingeschleppt, wodurch sich ein Luftpolster bildet, welches die Kontaktfläche für die Kraftübertragung verringert. Die Folie 9 liegt nicht mehr plan auf der Walze 2 auf, wodurch die Kraftübertragung zwischen der Folie 9 und der Walze 2 teilweise unterbrochen wird. Hierdurch werden in diesem Bereich der Walze Folienabschnitte in Streckrichtung unterschiedlich stark beschleunigt, was Breiten- und Dickenunterschiede der Folie 9 verursacht. Bei der Herstellung der Folie nach dem erfindungsgemäßen Verfahren nach Fig. 1 wird das Einschleppen von Luft dadurch verhindert, daß die Folie nahezu gleichzeitig in den Kontaktpunkten 5 und 6 von den Walzen 2 und 3 erfaßt wird. Es hat sich gezeigt, daß dadurch das Dickenprofil der Folie deutlich besser ist als bei einer Anordnung nach Figur 2 oder 3.

Die Erfindung ist nachstehend anhand von Zeichnungen näher erläutert.

Figur 1 zeigt die erfindungsgemäße Ausführungsform in schematischer Darstellung. Fig. 1A zeigt einen Detailausschnitt gem. dem Bereich IA in Fig. 1.

Die Figuren 2 und 3 zeigen Ausführungsbeispiele für Längsstreckwerke nach dem Stand der Technik und nicht erfindungsgemäßen Ausführungsformen.

Figur 4 A/B zeigt eine erfindungsgemäße Ausführungsform des Verfahrens bei dem die Walze 3 mit Hilfe der Walze 2 angetrieben wird.

Die Figuren 5 und 6 zeigen weitere Ausgestaltungen des erfindungsgemäßen Verfahrens.

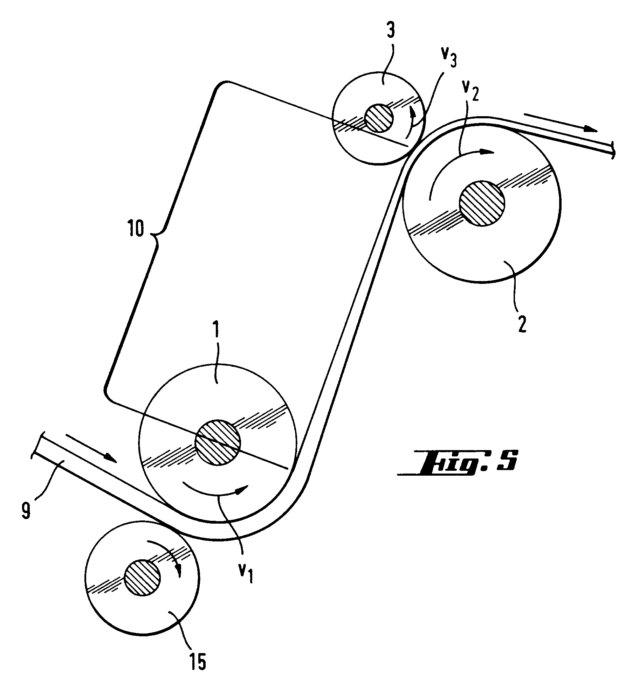

Das in Figur 1 dargestellte Längsstreckwerk enthält erfindungsgemäß die drei angetriebenen Walzen 1, 2 und 3, mit denen die Folie 9 um das Längsstreckverhältnis f gestreckt wird. Die Geschwindigkeiten der Walzen betragen $v_1$, $v_2$ und $v_3$. Das Längsstreckverhältnis f ergibt sich bei Kraftschlüssigkeit zwischen den Walzen 1, 2 und 3 und der Folie 9 näherungsweise aus dem Verhältnis der Geschwindigkeiten $v_2$ und $v_1$ der Walzen 2 und 1. Das Längsstreckverhältnis f liegt bei PP-Folien üblicherweise im Bereich von 4 bis 9, vorzugsweise im Bereich von 4,5 bis 8,0. Bei Erreichen der Streckzone 10 hat die Folie 9 eine Temperatur $T_S$ angenommen, bei der sie mit dem jeweilige Streckverhältnis gestreckt werden kann. Die Länge der Streckzone beträgt im allgemeinen 50 bis 600 mm, vorzugsweise 50 bis 500 mm und insbesondere 50 bis 400 mm. In Abhängigkeit von Rohstoff, Foliendicke, Streckgeschwindigkeit und Streckverhältnis liegt die Temperatur $T_S$ vorzugsweise zwischen 80 und 160°C. Die Streckkraft $F_S$ wird durch Kraftschluß (Haftreibung) zwischen der angetriebenen Walze 1 und der Folienoberfläche 7, sowie dem angetriebenen Walzenpaar 2/3 und den Folienoberflächen 7 und 8 auf die Folie 9 übertragen. Die Geschwindigkeiten $v_2$ und $v_3$ des Walzenpaares 2/3, sind in der Regel gleich groß, können aber auch geringfügig um maximal 5 % voneinander abweichen. Der Antrieb der Walzen 2 und 3 kann separat erfolgen, ein gemeinsamer Antrieb der Walzen 2 und 3 ist ebenfalls möglich. In Figur 4 ist ein Beispiel für einen gemeinsamen Antrieb des Walzenpaares 2/3 schematisch dargestellt. Die Walze 3 ist dazu zweckmäßiger Weise derart ausgebildet, daß im Randbereich 13 die beiden Walze 2 und 3 aufeinander abrollen. Die Folie 9 liegt in der Aussparung 14 auf beiden Walzenoberflächen plan auf und wird durch Reibschluß mitgenommen. Wird auf der Maschine nur eine Foliendicke hergestellt, so kann das Walzenpaar 2/3 aus einem harten Material, z.B. Stahl mit verchromter oder keramischer Oberfäche, bestehen. Eine etwas größere Flexibilität hinsichtlich der Foliendicke erreicht man, wenn z.B. die Walze 3 gummiert ist. Die Kraftübertragung ist besonders gut, wenn die Gummihärte etwa 50 bis 100 Shore-Härte A aufweist. Bei der Herstellung stark unterschiedlicher Foliendicken muß die Walze 3 gewechselt werden, was zweckmäßigerweise bei der Dickenumstellung durchgeführt wird. Durch den beidseitigen Kraftschluß zwischen den Walzenpaaren 2 und 3 und den Folienoberflächen 7 und 8 wird die Folienoberfläche 7 einer deutlich kleineren Spannungsbelastung ausgesetzt, als im Fall eines einseitigen Kraftschluß; d.h. bei Anordnungen mit nur einer angetriebenen Walze im schnellaufenden Teil des Streckwerks. Erfindungsgemäß wird der beidseitige Kraftschluß im schnellaufenden Teil des Streckwerkes realisiert, da dort wegen der geringeren Foliendicke die in der Folie wirkenden Spannungen höher sind als im langsamlaufenden Teil des Streckwerkes. Bezüglich Erreichen eines kritischen Spannungswertes ist der langsamlaufende Teil des Streckwerkes unkritischen.

Trotz der beidseitigen Kraftübertragung nach dem erfindungsgemäßen Verfahren wird die Streckkraft nicht zwingend je zur Hälfte von den Walzen 2 und 3 übertragen. Durch die weitere Umschlingung von Walze 2 mit der Folie 9 ist die Aufteilung der Streckkraft auf die Walzen 2 und 3 nicht gleichmäßig. Versuche haben gezeigt, daß mit der dargestellten Streckanordnung nach Fig. 1 (Umschlingungswinkel Folie - Walze 50 bis 180°) die Streckkraft bis zu einem Verhältnis von 40:60 auf die Walzen 3 und 2 aufgeteilt werden kann. Trotz der ungleichmäßigen Aufteilung der Kraftübertragung treten durch das erfindungsgemäße Verfahren keine so hohe Spannung in der Folie auf wie bei einseitiger Streckkraftübertragung.

Ein weiteres Merkmal der Erfindung ist, daß das Walzenpaar 2/3 so angeordnet ist, daß die von der Folie 9 mitgeschleppte Luft in den Auflaufpunkten 5 und 6 des Walzenpaars 2/3 abgequetscht wird. Die Folienoberflächen 7 und 8 werden dazu gleichzeitig von dem Walzenpaar 2/3 in den Kontaktpunkten 5 und 6 erfaßt und kraftschlüssig weitertransportiert. Dadurch wird gewährleistet, daß die Folie 9 plan auf den Walzen 2 und 3 aufliegt, ohne daß Luft mitgeschleppt wird und sich Luftpolster zwischen der Folie 9 und den Walzenoberflächen bilden. Die Kontaktpunkte sollen nicht mehr als 50mm, vorzugsweise nicht mehr als 40 mm und insbesondere nicht mehr als 20mm, gemessen in Folienbahnrichtung, auseinander liegen. Die Gefahr des Lufteinzuges wächst mit der Maschinengeschwindigkeit, da die Menge an von der Folie 9 mitgeschleppter Luft etwa linear mit der Folienbahngeschwindigkeit ansteigt.

Es wird beobachtet, daß bei einer Positionierung der Walzen 2 und 3 gemäß Figur 3 die Folie 9 bis zum Kontaktpunkt 5 auf der Walze 2 unruhig läuft. Die Folienbahnbreite ist instabil, d. h., sie ist Schwankungen ausgesetzt. Die zwischen der Folie 9 und der Walzenoberfläche eingezogene Luft entweicht schlagartig, nachdem sich ein kritischer Druck im Luftpolster aufgebaut hat. Der unruhige, instabile Folienlauf resultiert aus lokalen unterschiedlichen Beschleunigungen der Folienbahn. Es werden Dick- Dünnstellen in der Folie 9 initiiert, die ein schlechteres Dickenprofil der Folie 9 zur Folge haben.

Figur 5 zeigt eine weitere zweckmäßige Ausgestaltung der Erfindung. Das Streckwerk enthält erfindungsgemäß die drei angetriebenen Walzen 1, 2 und 3 und die erfindungsgmäße Anordnung des Walzenpaares 2/3. Das Streckwerk enthält zusätzlich im langsamlaufenden Teil eine Nipwalze 15, die zu einer weiteren Verbesserung der Kraftschlüssigkeit im langsam laufenden Teil des Streckwerks dient. Die Nipwalze kann angetrieben oder nichtangetrieben sein. Zweckmäßiger Weise wird aus den geschilderten Gründen die Nipwalze im Auflaufpunkt der Folie 9 auf die Walze 1 angeordnet, so daß analog wie beim Walzenpaar 2 und 3, die Folie gleichzeitig oder nahezu gleichzeitig mit Walze 1 und der Nipwalze in Kontakt kommt. Die Umschlingung der Walzen 1 und 2 mit der Folie 9 und der Durchmesser der Walze 3 werden vorteilhaft so gewählt, daß eine möglichst kurze Streckzone 10 realisiert werden kann (S-förmige Umschlingung). Dies ist beispielsweise für die Herstellung solcher Folien von Bedeutung, die spleißempfindlich sind oder die nur mit einem geringen Längsstreckverhältnis gestreckt werden können.

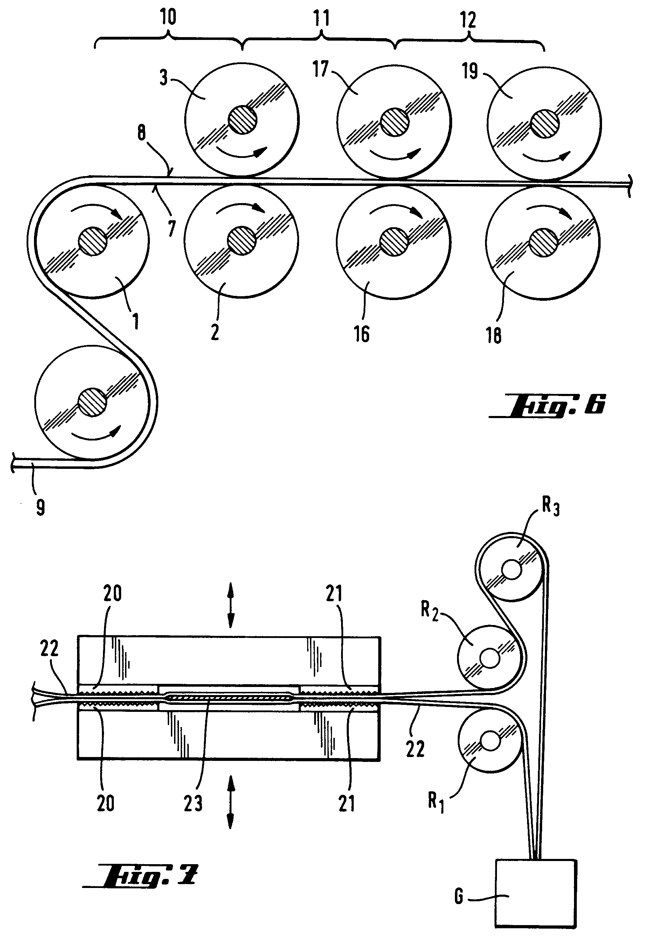

Figur 6 zeigt eine weitere Ausgestaltung der Erfindung, bei der die Längsstreckung auf mehrere Streckzonen 10 bis 12 aufgeteilt ist. Bei der dargestellten Ausführungsform sind ebenfalls die Walzen 16 bis 19 angetrieben. Mit der gewählten Anordnung der Walzen lassen sich die einzelnen Streckverhältnisse gezielt auf den Rohstoff abstimmen und die Kraftübertragung und die damit verbundenen Spannungen auf beide Folienoberflächen gleichmäßig aufteilen.

Die erfindungsgemäße Längsstreckung wird besonders vorteilhaft bei der Folienherstellung nach dem an sich bekannten Stenterverfahren angewendet. Es ist sowohl vorteilhaft für die Herstellung von nur monoaxial orientierten (nur in Längsrichtung) Folien, als auch für die Herstellung biaxial orientierter Folien geeignet.

Im Rahmen des Stenterverfahrens wird so vorgegangen, daß die den einzelnen Schichten der Folie entsprechenden Schmelzen durch eine Breitschlitzdüse extrudiert oder coextrudiert werden, der so erhaltene Schmelzefilm zur Verfestigung auf einer oder mehreren Walze/n abgezogen wird, die Folie anschließend gestreckt und thermofixiert und gegebenenfalls flamm- oder coronabehandelt wird.

Gegebenenfalls kann die Folie biaxial in Längs- und Querrichtung orientiert werden. Die biaxiale Streckung (Orientierung) wird aufeinanderfolgend durchgeführt, wobei es bevorzugt ist, zuerst nach dem erfindungsgemäßen Verfahren in Längsrichtung der Maschine und dann in Querrichtung der Maschine zu strecken.

Zunächst werden, wie beim Extrusionsverfahren üblich, die Polymeren bzw. die Polymermischungen der einzelnen Schichten in Extrudern komprimiert und verflüssigt, wobei gegebenenfalls zugesetzte Additive bereits in den Polymeren bzw. in den Polymermischungen enthalten sein können. Die Schmelzen werden dann gemeinsam und gleichzeitig durch eine Breitschlitzdüse gepreßt, und der ausgepreßte gegebenenfalls mehrschichtige Schmelzefilm wird auf einer oder mehreren Abzugswalzen abgezogen, wobei er abkühlt und sich verfestigt. Die so erhaltene Folie wird dann längs vorzugsweise auch quer zur Extrusionsrichtung gestreckt, was zu einer Orientierung der Molekülketten führt. Das Längsstrecken wird nach dem beschrieben erfindungsgemäßen Verfahren durchgeführt und das Querstrecken mit Hilfe eines entsprechenden Kluppenrahmens. Die Längsstreckverhältnisse liegen im Bereich von 4 bis 9, vorzugsweise 4,5 bis 8,0 und die Querstreckverhältnisse im Bereich von 7 bis 12, vorzugsweise 8 bis 11.

An die Streckung der Folie schließt sich ihre Thermofixierung (Wärmebehandlung) an, wobei die Folie etwa 0,1 bis 10 s lang bei einer Temperatur von 80 bis 160°C gehalten wird. Danach kann eine Druckvorbehandlung, z.B. mittels Flamme oder elektrischem Coronaverfahren erfolgen. Die Behandlungsintensität liegt im allgemeinen im Bereich von 36 bis 50 mN/m, vorzugsweise 38 bis 45 mN/m. Die so hergestellte Folie wird in üblicher Weise mit einer Aufwickeleinrichtung aufgewickelt.

Es hat sich als besonders günstig erwiesen, die Abzugswalze oder -walzen, durch die der ausgepreßte Schmelzefilm abgekühlt und verfestigt wird, durch einen Heiz- und Kühlkreislauf bei einer Temperatur von 10 bis 120°C, vorzugsweise 20 bis 100°C, zu halten. Die Temperaturen, bei denen die Längs- und die Querstreckung durchgeführt werden, können in einem relativ großen Bereich variieren und richten sich nach der jeweiligen Zusammensetzung der einzelnen Schichten und nach den gewünschten Eigenschaften der Folie. Im allgemeinen wird die Längsstreckung vorzugsweise bei 80 bis 160°C und die Querstreckung vorzugsweise bei 120 bis 170°C durchgeführt.

Die nach dem erfindungsgemäßen Verfahren hergestellte Folie kann einschichtig oder mehrschichtig aufgebaut sein. Sie kann nichtsiegelfähig oder siegelfähig sein. In einer besonderen Ausführungsform weist die Folie auf ihrer Basisschicht beidseitig Deckschichten auf. In einer weiteren Ausführungsform weist die Folie auf ihrer Basisschicht mindestens eine, gegebenenfalls beidseitig Zwischenschicht/en auf.

Die Basisschicht der Folie enthält im allgemeinen mindestens 85 Gew.-%, vorzugsweise 90 bis 99 Gew.-%, jeweils bezogen auf die Basisschicht, eines nachstehend beschriebenen thermoplastischen Polymer und gegebenenfalls zugesetzte Additive in jeweils wirksamen Mengen.

Als thermoplastische Polymere sind Polymere aus Olefinen mit 2 bis 10 C-Atomen, vorzugsweise Polypropylene, Polyethylene und/oder Polybutylene geeignet. Thermoplastische Polymere können auch Polyethylenterephtalate, Polybutylenterephtalate und andere Polyesterderivate sein. Vorzugsweise eignet sich das erfindungsgemäße Verfahren zur Herstellung von Folien mit einer Polypropylenbasisschicht. Unter den propylenhaltigen Polymeren sind Propylenhomopolymere besonders bevorzugt. Geeignete Propylenpolymere haben einen Schmelzpunkt von 120 bis 165°C, vorzugsweise 140 bis 162°C, und einen Schmelzflußindex (Messung DIN 53 735 bei 21,6 N Belastung und 230°C) von 1,0 bis 10 g/10 min, vorzugsweise von 1,5 bis 6 g/10 min. Propylenpolymere enthalten mindestens 80, vorzugsweise 90-100, insbesondere 95-100 Gew.-% Propyleneinheiten. Der n-heptanlösliche Anteil des Propylenpolymeren beträgt im allgemeinen 1 bis 10 Gew.-%, bezogen auf das Ausgangspolymere. Insbesondere sind Propylenhomopolymere bevorzugt, deren n-heptanunlöslicher Anteil isotaktisch ist. Der mittels $^{13}$C-NMR-Spektroskopie bestimmte Kettenisotaxieindex beträgt mehr als 85 %, vorzugsweise mehr als 90 %. Die Molekulargewichtsverteilung des Propylenhomopolymeren kann je nach Anwendungsgebiet in breiten Grenzen variieren. Das Verhältnis des Gewichtsmittels $M_w$ zum Zahlenmittel $M_n$ liegt im allgemeinen zwischen 2 und 15.

Ist die Folie opak, so enthält die Basisschicht zusätzlich vakuoleninitierende Füllstoffe, z.B. $CaCO_3$ oder unverträgliche Polymere und/oder Pigmente, wie sie im Stand der Technik beschrieben werden. Darüber hinaus kann die Basisschicht zusätzlich übliche Additive wie Antistatika, Antiblockmittel, Gleitmittel, Stabilisatoren, Neutralisationsmittel, Pigmente und/oder Nukleierungsmittel in jeweils wirksamen Mengen enthalten.

Wird nach dem erfindungsgemäßen Verfahren eine Elektroisolationsfolie (Kondensatorfolie) hergestellt, so muß der verwendete Rohstoff hochrein sein. Ein solches hochreines Polypropylen muß einen im Vergleich zum Verpakkungsrohstoff niedrigen Asche- und Chlorgehalt aufweisen und möglichst keine ionogenen Bestandteile enthalten. Elektrofolie ist daher üblicherweise nicht mit Antistatika und Gleitmittel ausgerüstet. Der Chlorgehalt des hochreinen Polypropylens beträgt weniger als 50 ppm und der Restaschegehalt weniger als 70 ppm.

Die nach dem erfindungsgemäßen Verfahren hergestellte orientierte Polypropylenfolie umfaßt in einer bevorzugten Ausführungsform mindestens eine, vorzugsweise beidseitige Deckschicht/en aus Olefinen mit 2 bis 10 Kohlenstoffatomen. Gegebenenfalls sind zusätzlich Zwischenschichten aus olefinischen Polymeren angebracht.

Beispiele für derartige olefinische Polymere der Deck- und/oder Zwischenschicht sind

ein Propylenhomopolymer
ein Copolymer aus

Ethylen und Propylen oder Ethylen und Butylen-1 oder
Propylen und Butylen-1 oder

ein Terpolymer aus

Ethylen und Propylen und Butylen-1 oder

eine Mischung oder ein Blend aus zwei oder mehreren der genannten Homo-, Co- und Terpolymeren, wobei insbesondere Propylenhomopolymer oder statistische Ethylen-Propylen-Copolymere mit einem Ethylengehalt von 1 bis 10 Gew.-%, bevorzugt 2,5 bis 8 Gew.-%, oder statistische Propylen-Butylen-1-Copolymere mit einem Butylengehalt von 2 bis 25 Gew.-%, bevorzugt 4 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 2 bis 30 Gew.-%, bevorzugt 4 bis 20 Gew.-%, jeweils bezogen auf das Gesamtgewicht des Terpolymeren, oder ein Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends, bevorzugt sind.

Das in der Deck- und/oder Zwischenschicht eingesetzte Propylenhomopolymere enthält mindestens 98 bis 100 Gew.-% Propylen und besitzt einen Schmelzpunkt von 140°C oder höher, vorzugsweise 150 bis 170°C, wobei isotaktisches Homopolypropylen bevorzugt ist. Das Homopolymere hat im allgemeinen einen Schmelzflußindex von 1,5 bis 20 g/10 min, vorzugsweise 2,0 bis 15 g/10 min.

Die in der Deck- und/oder Zwischenschicht eingesetzten vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 21,6 N (DIN 53 735) gemessen.

Gegebenenfalls können die Deck- und/oder Zwischenschichten ebenfalls Antistatika, Antiblockmittel, Gleitmittel, Neutralisationsmittel, Stabilisatoren und Kohlenwasserstoffharze enthalten.

Die Gesamtdicke der nach dem erfindungsgemäßen Verfahren hergestellten Polypropylenfolie kann innerhalb weiter Grenzen variieren und richtet sich nach dem beabsichtigten Einsatzzweck. Sie beträgt vorzugsweise 2 bis 120 µm, insbesondere 2,5 bis 100 µm, vorzugsweise 2,5 bis 80 µm, wobei die Basisschicht etwa 40 bis 100 % der Gesamtfoliendicke ausmacht.

Die Dicke der Deckschichten ist größer als 0,1 µm und liegt vorzugsweise im Bereich von 0,2 bis 5 µm, insbesondere 0,3 bis 1,5 μm, wobei die Deckschichten gleich oder verschieden dick sein können. Die Dicke der gegebenenfalls vorhandenen Zwischenschicht/en ist größer als 0,1 μm und liegt vorzugsweise im Bereich von 0,5 bis 15 μm, insbesondere 0,7 bis 10 μm.

Die nach dem erfindungsgemäßen Verfahren hergestellte Folie eignet sich insbesondere für die Verarbeitung auf schnellaufenden Maschinen, z.B. Verpackung, Kaschierung oder Metallisierung. Sie besitzt all die wichtigen Eigenschaften, die von orientierten Polypropylenfolien im Hinblick auf deren unterschiedliche Einsatzzwecke gefordert werden. Sie weist insbesondere eine gute Siegelbarkeit, eine gute Optik und ein ausgezeichnetes Dickenprofil auf.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230°C gemessen.

Schmelzpunkt

DSC-Messung, Maximum der Schmelzkurve, Aufheizgeschwindigkeit 20°C/min.

Molekulargewichtsbestimmung

Zur Bestimmung des mittleren Molekulargewichts wird die Drei-Detektor-Gelpermeationschromatographie verwendet. Die Substanz wird in einem Laufmittel wie THF aufgelöst und über eine Trennsäule gegeben. Die Trennsäule ist 90 cm lang und mit einem porösen Trägermaterial gefüllt, dessen Porengröße 5 μm beträgt. Die Detektion erfolgt mittels UV-Absorptionsspektroskopie bei verschiedenen Wellenlängen sowie mittels Brechungsindex und Lichtstreuvermögen der Fraktionen. Die Kalibrierung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte.

Bestimmung der Mindestsiegeltemperatur (MST)

Die Mindestsiegeltemperatur wird mit der peel-Methode bestimmt. Mit dem Siegelgerät HSG/ET der Firma Brugger werden heißgesiegelte Proben (Siegelnaht 20 mm x 150 mm) hergestellt, indem eine Folie bei unterschiedlichen Temperaturen mit Hilfe zweier beheizter Siegelbacken bei einem Siegeldruck von 15 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d.h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Mindestsiegeltemperatur (oder die minimale Siegeltemperatur) ist die Temperatur, bei der eine Siegelnahtfestigkeit von 0,5 N/15 mm erreicht wird.
Daneben wurde - ebenfalls nach der peel-Methode - die Zerreißkraft bei 130°C Siegeltemperatur gemessen.

Hottack

Mit Hottack bezeichnet man die Festigkeit einer noch heißen Siegelnaht unmittelbar nach dem Öffnen der Siegelwerkzeuge. Bei der verwendeten Prüfung mißt man die Trennung in mm, die die Heißsiegelnaht bei einer Belastung von 1 N (30 mm breite Siegelnaht) erfährt. Die Prüfung wird bei einer Siegeltemperatur von 150°C durchgeführt. Die Messung ist eine Hoechst interne Norm. Entsprechende DIN- und ASTM-Normen fehlen. Als Prüfgerät wird ein Wärmekontakt-Heißsiegelgerät mit geriffelten Siegelbacken (20, 21) und Umlenkrollen ($R_1$, $R_2$, $R_3$) für einen Trennwinkel von 180° verwendet (vgl. Figur 7). Die Siegelzeit berägt 0,5 s und der Siegeldruck 30 N/cm$^2$.

Beim Meßvorgang wird der Meßstreifen (22) mit einer Breite von 30 mm übereinandergelegt und an den Enden mit einem Gewicht von 1 N fixiert. Ein Flachspatel (23) wird zwischen die Folienlagen gesteckt und der Meßstreifen wird um die Umlenkrollen ($R_1$, $R_2$, $R_3$) über die Siegelbacken geführt und festgehalten, so daß der Flachspatel zwischen den geriffelten Siegelbacken liegt. Nach Ablauf der Siegelung öffnen sich die Backen selbsttätig. Der gesiegelte Meßstreifen wird durch das Gewicht von 1 N (G) ruckartig bis zur Umlenkrolle vorgezogen. Dort wird unter einem Trennwinkel von 180° die Siegelnaht, die aus der Siegelung des Backenpaares (21) resultiert, gespalten. Ausgewertet wird die Tiefe der Delaminierung der Siegelnaht in mm. Je größer der Zahlenwert ist, umso schlechter ist das Hottack. Damit wird bei dieser Bestimmungsmethode nur die Siegelnaht 21 getrennt.

Glanz

Der Glanz wurde nach DIN 67 530 bestimmt. Gemessen wurde der Reflektormeterwert als optische Kenngröße für die Oberfläche der Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größen angezeigt. Der Meßwert ist dimensionslos und muß mit dem Einstrahlwinkel angegeben werden.

Beurteilung des Dickenprofils

Das Dickenprofil wurde online durch Traversierung eines Meßkopfes über die Folienbahnbreite gemessen (Meßgerät von F + H oder von FAG). Der Meßkopf enthält einen Beta-Strahler, der die Absorption in der Folie mißt und den Wert in einen entsprechenden Dickenwert umrechnet. Die Dickenwerte werden über die Folienbreite gemessen und graphisch aufgezeichnet. Zur Beurteilung des Dickenprofils wird der sogenannte R-Wert herangezogen. Dieser berechnet sich aus dem Verhältnis der Differenz aus maximalen Dickenwert und minimalen Dickenwert und der mittleren Dicke der Folie.

$$\text{R-Wert} = \frac{\text{maximale Dicke - minimale Dicke}}{\text{mittlere Dicke}}$$

Das Dickenprofil ist um so besser, je kleiner der R-Wert ist.
Die Erfindung wird nun anhand von Ausführungsbeispielen näher erläutert.

Beispiel 1

Es wurde durch Coextrusion und durch anschließender stufenweiser Orientierung in Längs- und in Querrichtung eine transparente siegelfähige dreischichtige Folie mit symmetrischem Aufbau mit einer Gesamtdicke von 40 µm hergestellt. Die Deckschichten hatten eine Dicke von jeweils 0,6 µm.

A-Basisschicht:

99,70 Gew.-%   isotaktisches Polypropylen der Fa. Solvay mit dem Markennamen Eltex PHP 405
0,150 Gew.-%   N,N-bis-ethoxyalkylamin
0,150 Gew.-%   Erucasäureamid

B-Deckschichten:

99,67 Gew.-%   statistisches Ethylen-Propylen-Copolymeres mit einem $C_2$-Gehalt von 4,5 Gew.-%
0,33 Gew.-%    $SiO_2$ als Antiblockmittel mit einer mittleren Teilchengröße von 4 µm

Die Herstellungsbedingungen in den einzelnen Verfahrensschritten waren:

| Extrusion: | Temperaturen: | A-Schicht | 280°C |
|---|---|---|---|
| | | B-Schichten | 280°C |
| | Temperatur der Abzugswalze | | 30°C |
| Längsstreckung: | Temperatur | | 130°C |
| | Längsstreckverhältnis | | 5 |
| Querstreckung: | Temperatur | | 160°C |
| | Querstreckverhältnis | | 10 |
| Fixierung: | Temperatur | | 140°C |
| | Konvergenz | | 15 % |
| Folienbahngeschwindigkeit | | | 230 m/min |

Die Folie wurde nach dem erfindungsgemäßen Verfahren gemäß Figur 1 hergestellt. Die Eigenschaften der Folien gemäß den Beispielen und den Vergleichsbeispielen sind in der nachstehenden Tabelle zusammengefaßt dargestellt.

Beispiel 2

Es wird eine Folie nach dem erfindungsgemäßen Verfahren analog dem Beispiel 1 hergestellt.

Im Vergleich zu Beispiel 1 wurde in den Deckschichten anstelle des statistischen Copolymeren ein Propylenhomopolymeres (Eltex PHP 405) verwendet. Die Folie ist nicht siegelfähig. An den Verfahrensparametern wurde nichts geändert. Die Folie zeichnet sich durch sehr gute optische Eigenschaften und ein sehr gutes Dickenprofil aus.

Beispiel 3

Es wird eine Folie nach dem erfindungsgemäßen Verfahren analog dem Beispiel 1 hergestellt.

Im Vergleich zu Beispiel 1 wurde eine einschichtige Folie für die Elektroisolation hergestellt. Das Polymere für die Folie war ein hochreines isotaktisches Propylenhomopolymere der Fa. Borealis mit dem Markennamen Borealis VB 2142 E, Schmelzindex = 2,2 g/ 10 min. Die Dicke der Folie betrug 3,5 $\mu$m. Die gegenüber Beispiel 1 geänderten Verfahrensbedingungen bei der Herstellung der Folie waren:

| Extrusion: | Temperatur: | 270°C |
|---|---|---|
| | Temperatur der Abzugswalze | 90°C |
| Längsstreckung: | Temperatur | 150°C |
| | Längsstreckverhältnis | 5,5 |

Infolge der hohen Abzugswalzentemperatur von 90°C und den speziellen Längsstrecktemperaturen ergibt sich eine Folie mit rauher Oberfläche, wie z.B. in der EPA 0 497 160 beschrieben. Die Folie zeichnet sich durch ein ausgezeichnetes Dickenprofil aus.

Vergleichsbeispiel 1

Im Vergleich zu Beispiel 1 wurde jetzt die Längsstreckung der Folie nach Figur 1 durchgeführt, jedoch ohne Antrieb der Walze 3, d.h. nur die Walze 2 war angetrieben. Das Hottack und die Optik der Folie ist bedeutend schlechter, das Dickenprofil der Folie ist schlechter geworden.

Vergleichsbeispiel 2

Im Vergleich zu Beispiel 1 wurde jetzt die Längsstreckung der Folie nach Figur 3 durchgeführt, bei dem die Kontaktpunkte mehr als 100 mm auseinanderliegen und die Folie nicht mehr gleichzeitig von den angetriebenen Walzen 2 und 3 erfaßt wird. Das Hottack und die Optik der Folie ist schlechter, das Dickenprofil der Folie ist bedeutend schlechter geworden.

Vergleichsbeispiel 3

Im Vergleich zu Beispiel 2 wurde jetzt die Längsstreckung der Folie nach Figur 1 durchgeführt, jedoch ohne Antrieb der Walze 3, d.h. nur die Walze 2 war angetrieben. Die Optik der Folie ist bedeutend schlechter, das Dickenprofil ist schlechter geworden.

Vergleichsbeispiel 4

Im Vergleich zu Beispiel 2 wurde jetzt die Längsstreckung der Folie nach Figur 3 durchgeführt, bei dem die Kontaktpunkte mehr als 100 mm auseinanderliegen. Die Optik der Folie ist schlechter, das Dickenprofil ist bedeutend schlechter geworden.

Vergleichsbeispiel 5

Im Vergleich zu Beispiel 3 wurde jetzt die Längsstreckung der Folie nach Figur 1 durchgeführt, jedoch ohne Antrieb der Walze 3, d.h. nur die Walze 2 war angetrieben. Das Dickenprofil der Folie ist schlechter geworden.

Vergleichsbeispiel 6

Im Vergleich zu Beispiel 3 wurde jetzt die Längsstreckung der Folie nach Figur 3 durchgeführt, bei dem die Kontaktpunkte mehr als 100 mm auseinanderliegen. Das Dickenprofil der Folie ist bedeutend schlechter geworden.

**Patentansprüche**

1. Verfahren zur Längsstreckung einer mindestens einschichtigen Folie aus thermoplastischem Kunststoff, die vor der Streckung im langsamlaufenden Teil des Streckwerkes auf eine für die Streckung geeignete Temperatur aufgewärmt wird und einer Streckzone (10) zugeführt wird, dadurch gekennzeichnet, daß

   a) der langsamlaufende Teil des Streckwerkes die angetriebene Walze (1) enthält und der schnellaufende Teil des Streckwerkes das angetriebene Walzenpaar (2)/(3) enthält, wobei das Walzenpaar (2)/(3) so angeordnet ist, daß ein Walzenspalt (4) gebildet wird und

   b) die Folie (9) in den Walzenspalt (4) derart geführt wird, daß sie gleichzeitig oder nahezu gleichzeitig von dem Walzenpaar (2)/(3) in den Kontaktpunkten (5)/(6) erfaßt wird und die Folie (9) zwischen den Walzen (1) und dem Walzenpaar (2)/(3) gestreckt wird.

2. Verfahren nach Anspruch 1, dadurch gekennzeichnet, daß im schnellaufenden Teil des Streckwerkes entweder die Walze (2) oder die Walze (3) weiter von der Folie (9) umschlungen wird.

3. Verfahren nach Anspruch 1 und 2, dadurch gekennzeichnet, daß im schnellaufenden Teil des Streckwerkes mindestens 10 %, vorzugsweise mindestens 20 % und insbesondere mindestens 30 % der Streckkaft durch die nicht weiter von der Folie (9) umschlungene Walze auf eine der Folienoberflächen (7) oder (8) übertragen wird.

4. Verfahren nach Anspruch 1 bis 3, dadurch gekennzeichnet, daß im schnellaufenden Teil des Streckwerkes die von der Folie mitgeschleppte Luft in den Kontaktflächen (5) und (6) abgequetscht wird.

5. Verfahren nach Anspruch 1 bis 4, dadurch gekennzeichnet, daß die Streckkraft kraftschlüssig (Haftreibung) durch die Walze (1) und dem Walzenpaar (2)/(3) auf die Folie (9) übertragen wird.

6. Verfahren nach Anspruch 1 bis 5, dadurch gekennzeichnet, daß die Geschwindigkeiten des Walzenpaares (2)/(3) nicht mehr als 5 % voneinander abweichen.

7. Verfahren nach Anspruch 1 bis 6, dadurch gekennzeichnet, daß die Kontaktpunkte (5) und (6) nicht mehr als 50 mm, vorzugsweise nicht mehr als 40 mm und insbesondere nicht mehr als 20 mm, gemessen in Folienbahnrichtung, auseinander liegen.

8. Verfahren nach Anspruch 1 bis 7, dadurch gekennzeichnet, daß die Länge der Streckzone (10) 50 bis 600 mm, vorzugsweise 50 bis 500 mm und insbesondere 50 bis 400 mm beträgt.

9. Verfahren nach Anspruch 1 bis 8, dadurch gekennzeichnet, daß die Folientemperatur $T_S$ in der Streckzone (10) 80 bis 160°C beträgt.

10. Verfahren nach Anspruch 1 bis 9, dadurch gekennzeichnet, daß eine der beiden Walzen (2) oder (3) einen Gummiüberzug aufweist.

11. Verfahren nach Anspruch 1 bis 10, dadurch gekennzeichnet, daß der langsamlaufende Teil des Streckwerkes eine nichtangetriebene oder eine angetriebene Walze (15) enthält.

12. Verfahren nach Anspruch 1 bis 11, dadurch gekennzeichnet, daß die Walze (3) von Walze (2) angetrieben wird.

13. Verfahren nach Anspruch 1 bis 12, dadurch gekennzeichnet, daß die Walzen (1) und (2) S-förmig von der Folie (9) umschlungen werden.

14. Verfahren nach Anspruch 1 bis 13, dadurch gekennzeichnet, daß die Streckung in mehrere Teilstreckungen aufgeteilt ist.

**15.** Verfahren nach Anspruch 1 bis 14, dadurch gekennzeichnet, daß eine biaxial orientierte Polypropylenfolie hergestellt wird.

**16.** Verfahren nach Anspruch 1 bis 15, dadurch gekennzeichnet, daß die nach dem Verfahren hergestellte boPP-Folie einschichtig ist.

**17.** Verfahren nach Anspruch 1 bis 15, dadurch gekennzeichnet, daß die nach dem Verfahren hergestellte boPP-Folie mehrschichtig ist.

**18.** Verfahren nach Anspruch 1 bis 15, dadurch gekennzeichnet, daß die nach dem Verfahren hergestellte boPP-Folie mehrschichtig und nichtsiegelfähig ist.

**19.** Verfahren nach Anspruch 1 bis 15, dadurch gekennzeichnet, daß die nach dem Verfahren hergestellte boPP-Folie mehrschichtig und siegelfähig ist.

**20.** Verfahren nach Anspruch 1 bis 15, dadurch gekennzeichnet, daß die nach dem Verfahren hergestellte boPP-Folie eine Dicke von 2 bis 120 $\mu$m, vorzugsweise eine Dicke von 2,5 bis 120 $\mu$m und insbesondere eine Dicke von 3 bis 120 $\mu$m hat.

**21.** Verfahren nach Anspruch 1 bis 4, dadurch gekennzeichnet, daß eine Polyethylenterephtalat- oder eine Polybutylenterephtalatfolie hergestellt wird.

**22.** Vorrichtung zum Längsstrecken von Folien aus thermoplastischem Kunststoff umfassend

a) mindestens eine angetriebene Walze (1) welche mit der Geschwindigkeit $v_1$ angetrieben wird und
b) mindestens zwei angetriebene Walzen (2) und (3) welche mit den Geschwindigkeiten $v_2$ und $v_3$ angetrieben werden,

wobei die Geschwindigkeiten $v_2$ und $v_3$ um maximal 5% (bezogen auf die schneller laufende Walze) voneinander abweichen und
die Geschwindigkeit $v_1$ kleiner ist als die Geschwindigkeit der Walzen $v_2$ und $v_3$ und
die Walzen (2) und (3) so hinter der Walze 1 angeordnet sind, daß bei der Längstreckung der Folie mittels der Vorrichtung die Folie zuerst Kontakt mit Walze 1 und danach Kontakt mit Walze (2)/(3) hat
und die Walzen (2) und (3) so zueinander angeordnet sind, daß bei der Längsstreckung der Folie mittels der Vorrichtung die Folie nahezu gleichzeitig mit den Walzen (2) und (3) in Kontakt kommt.

**23.** Verfahren zur Längsstreckung von Folien aus thermoplastischem Kunststoff, dadurch gekennzeichnet, daß ein Teil der zur Orientierung notwendigen Streckkraft über beide Folienoberflächen übertragen wird.

**Fig. 1**

**Fig. 1A**

Fig. 2

Fig. 3

Fig. 4A

Fig. 4B

Fig. 5

Fig. 6

Fig. 7